# EUROPEAN PATENT SPECIFICATION

(11) **EP 0 885 916 B1**
(45) Date of publication and mention of the grant of the patent: **20.09.2000**
(21) Application number: 98109602.7
(22) Date of filing: 27.05.1998
(51) Int. Cl.: C08G 77/60, C07F 7/18

(54) **Photoluminescent polydisilacyclobutanes**
Photolumineszierende Polydisilacyclobutane
Polydisilacyclobutanes photoluminescents

(30) Priority: 17.06.1997 US 877787; 15.10.1997 US 951161
(43) Date of publication of application: 23.12.1998
(73) Proprietor: DOW CORNING CORPORATION, Midland Michigan 48686-0994 (US)
(72) Inventor: Auner, Norbert, Hessische Strasse 1-2, 10115 Berlin (DE); Pernisz, Udo C., Midland, Michigan 48640 (US)
(74) Representative: Sternagel, Fleischer, Godemeyer & Partner Patentanwälte

(56) References cited:
- B. GOETZE ET AL.: "Towards 2-Silaallenes: Synthesis of Spirocyclic Precursors" CHEM. EUR. J., vol. 3, no. 6, 4 June 1997, pages 948-957, XP002103212 Weinheim

## Description

This invention is directed to polycarbosilanes, and to polymers in which silicon atoms are linked through substituted alkylene bridges. The substituted polysil-alkylenes used herein are polydisilacyclobutanes with two different silacyclobutane units.

The literature makes reference to processes using halosilanes containing a single unsaturated linkage. See, for example, Z. Anorg. Allg. Chem., Volume 558, pages 55-86, (1988); Chem. Ber., Volume 126. pages 575-580, (1993); and J. Prakt. Chem., Volume 337, pages 79-92, (1995).

By using halosilanes containing two unsaturated linkages, as exemplified in Journal of Organometallic Chemistry, Volume 377, pages 175-195, (1989), we are able to produce higher molecular weight materials, i.e., polymers.

While a recent article relative to certain silacyclobutanes has been published, the article does not describe polymers which replicate the polymer described herein. In particular, reference may be made to Chem. Eur. J., Volume 3, Issue 6, "Towards 2-Silaallenes: Synthesis of Spirocyclic Precursors", pages 948-957, (June 4, 1997).

This invention refers to photoluminescent polydisilacyclobutanes of the structure 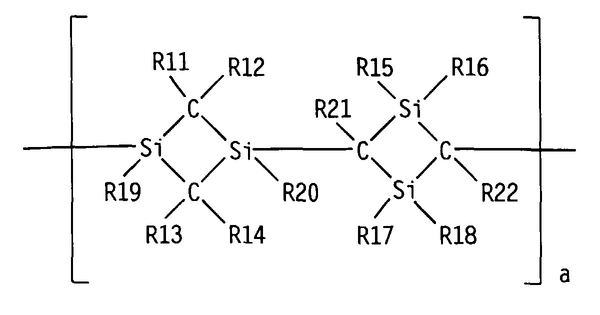 where a is an integer having a value of 2 to 20; R14 to R18 are alkyl or aryl groups; R19 and R20 are alkoxy groups; and R11 to R14 and R21 and R22 represent a hydrogen atom or an alkyl group containing 2 to 10 carbon atoms. Preferably at least one of R11 or R12 and at least one of R13 or R14 and R21 and R22 represent an alkyl group containing 2 to 10 carbon atoms.

The present invention also refers to a method of preparing of the polysilycyclobutanes of the present invention and to the polysilycyclobutanes obtainable by this method. These polydisilacyclobutanes are made by reacting an organolithium reagent with monomer 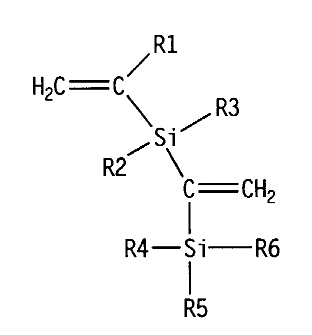 where R1 is hydrogen or an alkyl group containing 2 to 10 carbon atoms; R2 and R3 represent halogen atoms; R4 and R5 represent independently at each occurrence an alkyl or aryl group; and R6 is an alkoxy group. Preferably R1 is hydrogen, R2 and R3 are chlorine and R4 and R5 are alkyl, most preferably methyl. Such monomers are made by methods generally described in Chem. Ber., Volume 126, pages 575-580, (1993).

This invention is directed to methods of preparing polymers having low to medium degrees of polymerization based on a disilacyclobutane building block. The basic reaction involves using a divinyldichlorocarbosilane and tert-butyllithium to obtain the desired products.

Unexpectedly, we found that these polymers exhibit strong photoluminescence in the blue region of the visible spectrum when excited by ultraviolet (UV) light with a wavelength of 337 nm (nanometer).

Polymers representative of our invention are polydisilacyclobutanes with repeating unit 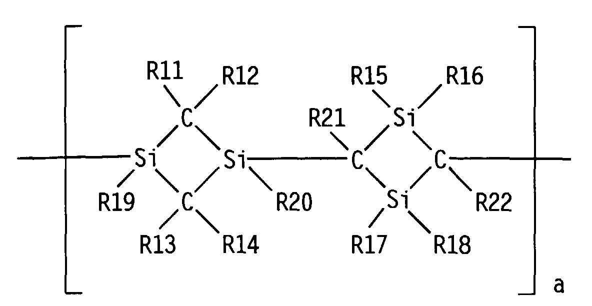 where a is an integer having a value of 2 to 20; R14 to R18 are alkyl or aryl groups; R19 and R20 are alkoxy groups; and R11 to R14 and R21 and R22 represent a hydrogen atom or an alkyl group containing 2 to 10 carbon atoms. Preferably at least one of R11 or R12 and at least one of R13 or R14 and R21 and R22 represent an alkyl group containing 2 to 10 carbon atoms.These are linear polymers terminated by suitable alkyl, aryl, silyl, halogen or alkoxy groups.

One species (I) of this genus is:

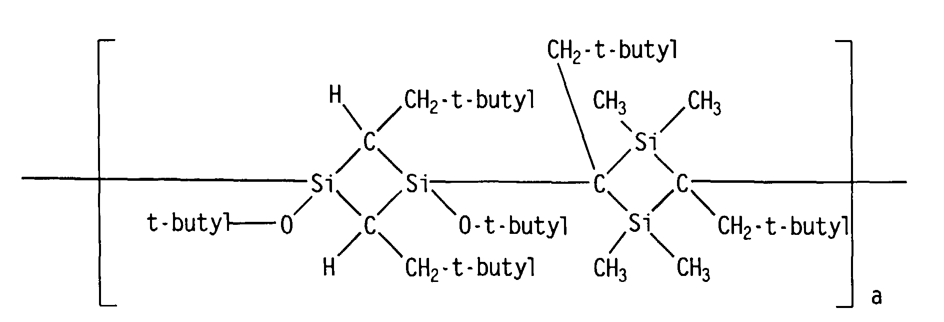

Particles of species (I) where a = 10 were irradiated with UV light at a wavelength of 337 nm generated by a pulsed nitrogen laser with 0.1 mJ per pulse. Photoluminescence was bright whiteish blue.

The process for making such polymers is shown below:

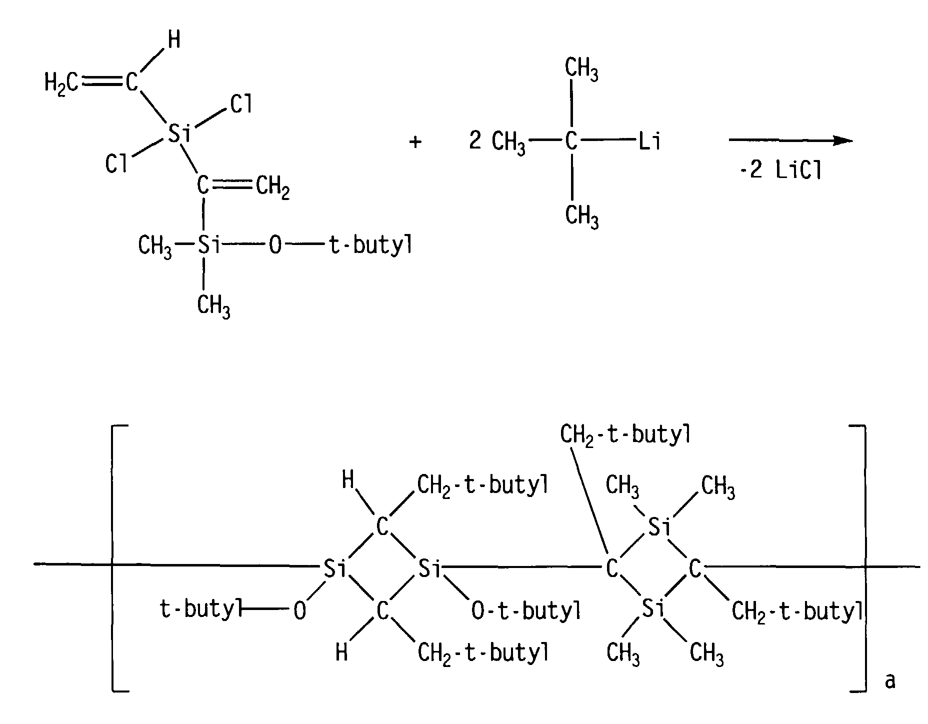

Tert-butyllithium is shown as the preferred organolithium reagent. An example representing this process is set forth below to illustrate our invention in more detail.

### EXAMPLE

Into a container were combined stoichiometric amounts of the unsaturated carbosilane 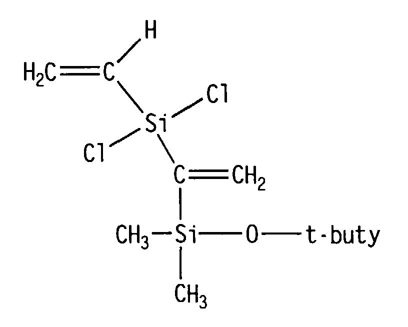 and tert-butyllithium (mole ratio unsaturated carbosilane:tert-butyllithium = 1:2), in pentane as solvent, at 0°C. These reactants were heated to room temperature, i.e., 20-25°C. After removing the solvent, a yellow solid resulted. The yellow solid was identified as species (I) shown above, where e had a value of 10. For purification, a portion of the sample of species (I) was extracted with methanol. As a result, terminal chlorine atoms and t-butoxy groups in species (I) were replaced by methoxy groups, yielding a white powder where a also had a value of 10.

Isolation of photoluminescent polydisilacyclo-butanes was conducted by extraction or precipitation by addition of alcohol.

Polymers prepared according to our invention are useful as passive or active display materials, and in electroluminescent devices. In such utility, they are readily incorporated into road signs and lane markers. The polymers also find application in various types of displays as luminescent coatings for improving their visibility.

## Claims

1. A photoluminescent polydisilacyclobutane with a repeating unit of the formula 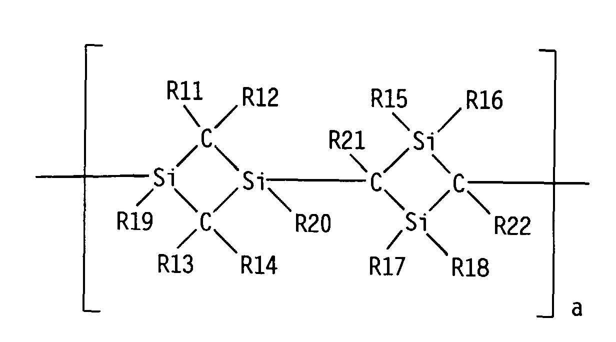 where a is an integer having a value of 2 to 20; R14 to R18 are alkyl or aryl groups; R19 and R20 are alkoxy groups; and R11 to R14 and R21 and R22 represent a hydrogen atom or an alkyl group containing 2 to 10 carbon atoms.

2. Photoluminescent polydisilacyclobutanes according to claim 1, wherein at least one of R11 or R12 and at least one of R13 or R14 and R21 and R22 represent an alkyl group containing 2 to 10 carbon atoms.

3. Photoluminescent polydisilacyclobutanes according to any of the preceding claims exhibiting photoluminescence in the blue region of the visible spectrum when excited by ultraviolet light.

4. A method of making photoluminescent polydisilacyclobutanes comprising contacting an unsaturated carbosilane containing at least two silicon atoms, with an organolithium reagent in a solvent at a temperature of 0-25°C.

5. A method according to claim 4 in which the unsaturated carbosilane containing at least two silicon atoms has the formula 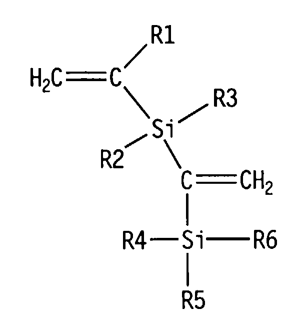 where R1 is hydrogen or an alkyl group containing 2 to 10 carbon atoms; R2 and R3 represent halogen atoms; R4 and R5 represent independently at each occurrence an alkyl or aryl group; and R6 is an alkoxy group.

6. The method of claim 5, wherein R1 is hydrogen, R2 and R3 are chlorine and R4 and R5 are alkyl, preferably methyl.

7. Photoluminescent polydisilacyclobutanes obtainable by the method of any of claims 4-6.

8. A carbosilane of formula 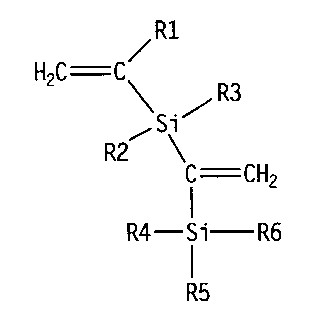 where R1 is hydrogen or an alkyl group containing 2 to 10 carbon atoms; R2 and R3 represent halogen atoms; R4 and R5 represent independently at each occurrence an alkyl or aryl group; and R6 is an alkoxy group.

9. The carbosilan of claim 8, wherein R1 is hydrogen, R2 and R3 are chlorine and R4 and R5 are alkyl, preferably methyl.

## Patentansprüche

1. Fotolumineszierendes Polydisilacyclobutan mit einer Struktureinheit der Formel: 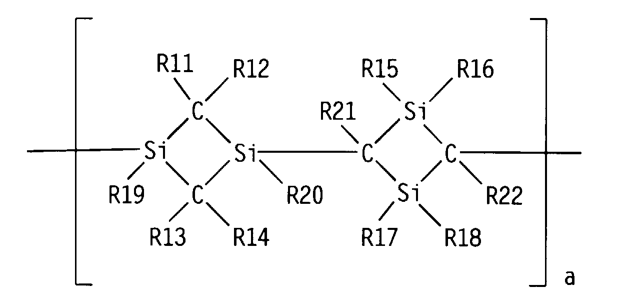 worin a eine ganze Zahl mit einem Wert von 2 bis 20 ist, R14 bis R18 Alkyl- oder Arylgruppen sind, R19 und R20 Alkoxygruppen sind und R11 bis R14 und R21 und R22 für ein Wasserstoffatom oder eine Alkylgruppe mit 2 bis 10 Kohlenstoffatomen stehen.

2. Fotolumineszierende Polydisilacyclobutane nach Anspruch 1, wobei wenigstens einer von R11 oder R12 und wenigstens einer von R13 oder R14 und R21 und R22 für eine Alkylgruppe mit 2 bis 10 Kohlenstoffatomen stehen.

3. Fotolumineszierende Polydisilacyclobutane nach einem der vorstehenden Ansprüche, die eine Fotolumineszenz im blauen Bereich des sichtbaren Spektrums zeigen, wenn sie mit ultraviolettem Licht angeregt werden.

4. Verfahren zur Herstellung von fotolumineszierenden Polydisilacyclobutanen, umfassend Inkontaktbringen eines ungesättigten Carbosilans mit wenigstens 2 Siliciumatomen mit einem Organolithiumreagenz in einem Lösungsmittel bei einer Temperatur von 0 bis 25°C.

5. Verfahren nach Anspruch 4, bei dem das ungesättigte Carbosilan, das wenigstens 2 Siliciumatome aufweist, der Formel 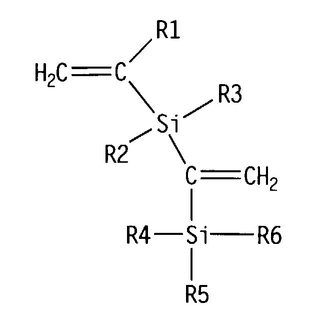 entspricht, worin R1 Wasserstoff oder eine Alkylgruppe mit 2 bis 10 Kohlenstoffatomen ist, R2 und R3 für Halogenatome stehen, R4 und R5 unabhängig bei jedem Auftreten für eine Alkyl- oder Arylgruppe stehen und R6 eine Alkoxygruppe ist.

6. Verfahren nach Anspruch 5, wobei R1 Wasserstoff ist, R2 und R3 Chlor sind und R4 und R5 Alkyl, vorzugsweise Methyl sind.

7. Fotolumineszierende Polydisilacyclobutane, erhältlich nach dem Verfahren nach einem der Ansprüche 4 bis 6.

8. Carbosilan der Formel 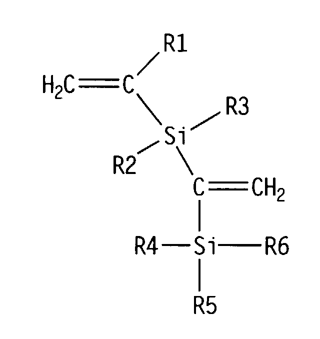 worin R1 Wasserstoff oder eine Alkylgruppe mit 2 bis 10 Kohlenstoffatomen ist, R2 und R3 für Halogenatome stehen, R4 und R5 unabhängig bei jedem Auftreten für eine Alkyl- oder Arylgruppe stehen und R6 eine Alkoxygruppe ist.

9. Carbosilan nach Anspruch 8, wobei R1 Wasserstoff ist, R2 und R3 Chlor sind und R4 und R5 Alkyl, vorzugsweise Methyl sind.

## Revendications

1. Polydisilacyclobutane photoluminescent ayant un motif répété de la formule 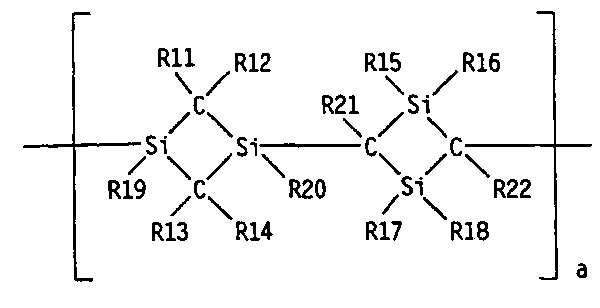 dans laquelle a est un entier ayant une valeur de 2 à 20 ; R14 à R18 sont des groupes alkyles ou aryles ; R19 et R20 sont des groupes alcoxy ; et R11 à R14 et R21 et R22 représentent un atome d'hydrogène ou un groupe alkyle contenant 2 à 10 atomes de carbone.

2. Polydisilacyclobutanes photoluminescents selon la revendication 1, dans lesquels au moins l'un parmi R11 et R12 et au moins l'un parmi R13 et R14, et R21 et R22 représentent un groupe alkyle contenant 2 à 10 atomes de carbone.

3. Polydisilacyclobutanes photoluminescents selon l'une quelconque des revendications précédentes, présentant de la photoluminescence dans la région bleue du spectre visible lorsqu'ils sont excités par une lumière ultraviolette.

4. Procédé de préparation de polydisilacyclobutanes photoluminescents, comprenant la mise en contact d'un carbosilane insaturé contenant au moins deux atomes de silicium, avec un réactif organolithié dans un solvant à une température de 0 à 25 °C.

5. Procédé selon la revendication 4, dans lequel le carbosilane insaturé contenant au moins deux atomes de silicium a la formule 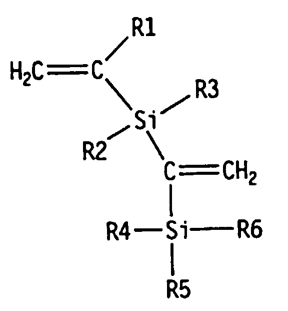 dans laquelle R1 est de l'hydrogène ou un groupe alkyle contenant 2 à 10 atomes de carbone ; R2 et R3 représente des atomes d'halogène ; R4 et R5 représentent indépendamment à chaque apparition un groupe alkyle ou aryle ; et R6 est un groupe alcoxy.

6. Procédé selon la revendication 5, dans lequel R1 est de l'hydrogène, R2 et R3 sont du chlore et R4 et R5 sont un groupe alkyle, de préférence méthyle.

7. Polydisilacyclobutanes photoluminescents pouvant être obtenus par le procédé selon l'une quelconque des revendications 4 à 6.

8. Carbosilane de formule 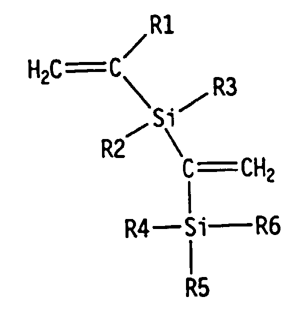 dans laquelle R1 est de l'hydrogène ou un groupe alkyle contenant 2 à 10 atomes de carbone ; R2 et R3 représentent des atomes d'halogène ; R4 et R5 représentent indépendamment à chaque fois un groupe alkyle ou aryle ; et R6 est un groupe alcoxy.

9. Carbosilane selon la revendication 8, dans lequel R1 est de l'hydrogène, R2 et R3 sont du chlore et R4 et R5 sont un groupe alkyle, de préférence méthyle.
